# EUROPEAN PATENT SPECIFICATION

(11) **EP 1 488 955 B1**
(45) Date of publication and mention of the grant of the patent: **25.04.2007**
(21) Application number: 04014106.1
(22) Date of filing: 16.06.2004
(51) Int. Cl.: B60Q 1/12

(54) **Lighting device for vehicles**
Beleuchtungseinrichtung für Fahrzeuge
Dispositif d'éclairage pour véhicules

(30) Priority: 19.06.2003 JP 2003175336
(43) Date of publication of application: 22.12.2004
(73) Proprietor: ICHIKOH INDUSTRIES, LTD., Tokyo 141-0022 (JP)
(72) Inventor: Hasumi, Hirofumi c/o Ichikoh Industries, Ltd, Isehara-shi Kanagawa-ken 259-1192 (JP)
(74) Representative: Grünecker, Kinkeldey, Stockmair & Schwanhäusser Anwaltssozietät

(56) References cited:
- WO-A-01/40018
- PATENT ABSTRACTS OF JAPAN vol. 008, no. 061 (M-284), 23 March 1984 (1984-03-23) & JP 58 211933 A (TAKAKAZU MARUMO), 9 December 1983 (1983-12-09)
- PATENT ABSTRACTS OF JAPAN vol. 2000, no. 22, 9 March 2001 (2001-03-09) & JP 2001 123802 A (HITACHI LTD), 8 May 2001 (2001-05-08)

## Description

### BACKGROUND OF THE INVENTION

### 1) Field of the Invention

The present invention relates to a vehicle lighting device. More specifically, this invention relates to turning on and off of lamps that are mounted on a vehicle in addition to the head lights.

### 2) Description of the Related Art

In the present specification, claims, and drawings, the term "road surface and the like" includes any one of a surface of a road (hereinafter, "road surface") on which a vehicle is running, a person on the road surface, and an object in a view of the driver of the vehicle. For example, cars on the road surface, road signs, and building around the road.

Vehicle lighting devices are sometimes mounted, in addition to other lights such as head lights, on right and left sides of the front part of a vehicle. A conventional vehicle lighting device has been disclosed, for example, in JP 2001 138 802. The vehicle lighting device disclosed in this literature includes left- and right-side steer lamps (3a, 3b). These steer lamps turn on/off through switching on/off of a lighting switch, adjust a range to be illuminated based on a steering angle, turn off when the vehicle backs up, and turn on when the vehicle shifts to a normal running state.

However, the steer lamps (3a, 3b) concurrently turn on or off. As a result, power is consumed unnecessarily.

JP 58211933 discloses the use of microswitches connected to steering arms of a car to switch on only a right subheadlight on a right turn and only a left subheadlight on a left turn. WO01/40018 discloses a switching unit operated in conjunction with a worm integrally formed on the steering shaft of a vehicle, which apart from separately switching front support lamps when turning left or right, also switches left and right rear support lights when turning left or right while the back gear unit is operated.

### SUMMARY OF THE INVENTION

It is an object of the present invention to turn on or off only a desired one of vehicle lighting devices.

A vehicle lighting device according to an aspect of the present invention is mounted on a vehicle. The vehicle lighting device includes at least one left-side additional lamp that is mounted at a first place on a front part of the vehicle; at least one right-side additional lamp that is mounted on a second place on the front part of the vehicle; a steering sensor that detects a steering angle and a steering direction of steering of the vehicle and outputs a steering signal that represents the steering angle and the steering direction detected; a reverse sensor that detects whether a shift lever of the vehicle is in a reverse position and outputs a reverse signal when the shift lever is in the reverse position; a left-side additional-lamp driver circuit that drives the left-side additional lamp; a right-side additional-lamp driver circuit that drives with the right-side additional lamp; and a control device. The control device controls the left-side additional-lamp driver circuit so as to turn on the left-side additional lamp when the steering signal indicates that the vehicle is turning to left, and controls the right-side additional-lamp driver circuit so as to turn on the right-side additional lamp when the steering signal indicates that the vehicle is turning to right, and controls the left-side additional-lamp driver circuit so as to turn off the left-side additional lamp and controls the right-side additional-lamp driver circuit so as to turn off the right-side additional lamp when the reverse sensor outputs the reverse signal.

The other objects, features, and advantages of the present invention are specifically set forth in or will become apparent from the following detailed description of the invention when read in conjunction with the accompanying drawings.

### BRIEF DESCRIPTION OF THE DRAWINGS

Fig. 1 is a block diagram of the configuration of a vehicle lighting device according to a first embodiment the present invention;
Fig. 2 is a flowchart of a process procedure performed by a control device;
Fig. 3A illustrates a case in which a right-side additional lamp is on and a left-side additional lamp is off in the vehicle lighting device according to the first embodiment;
Fig. 3B illustrates a case in which the right-side additional lamp is off and the left-side additional lamp is on in the vehicle lighting device according to the first embodiment;
Fig. 4 illustrates a case in which a vehicle is backing up;

### DETAILED DESCRIPTION

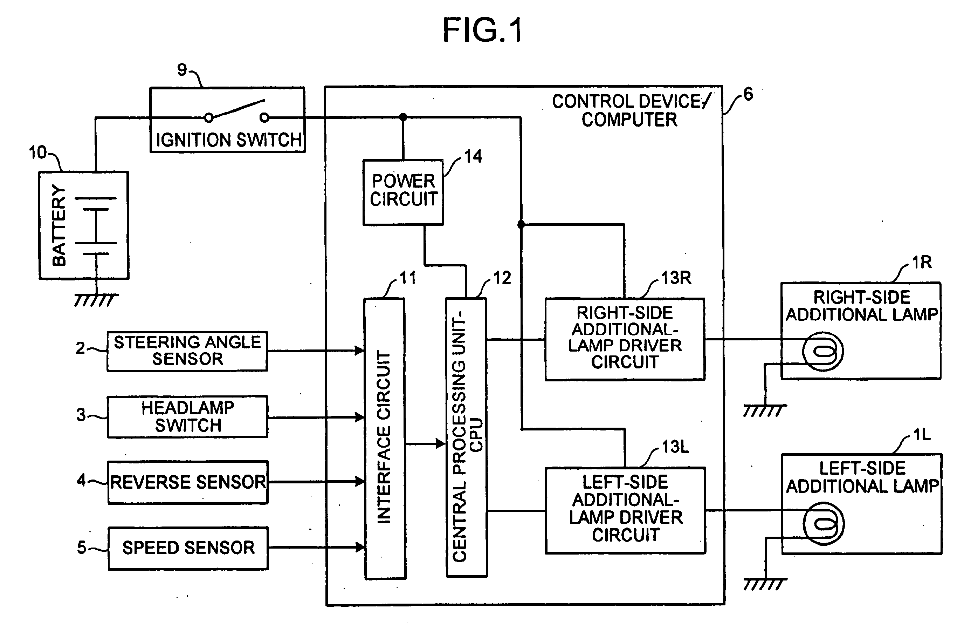

Exemplary embodiments of a vehicle lighting device according to the present invention are explained below with reference to the accompanying drawings. Fig. 1 to Fig. 4 relate a vehicle lighting device according to a first embodiment of the present invention.

The vehicle lighting device according to the first embodiment relates to a lighting system that includes a left-side additional lamp and a right-side additional lamp. The left-side additional lamp and the right-side additional lamp are turned on and off separately and in synchronization with the steering of a steering wheel.

As shown in Fig. 1, the vehicle lighting device according to the first embodiment includes a left-side additional lamp 1L, a right-side additional lamp 1R, a steering angle sensor 2, a headlamp switch 3, a reverse sensor 4, a speed sensor 5, a control device 6 (control circuit and ECU-electronic control unit), a left-side additional-lamp driver circuit 13L, and a right-side additional-lamp driver circuit 13R.

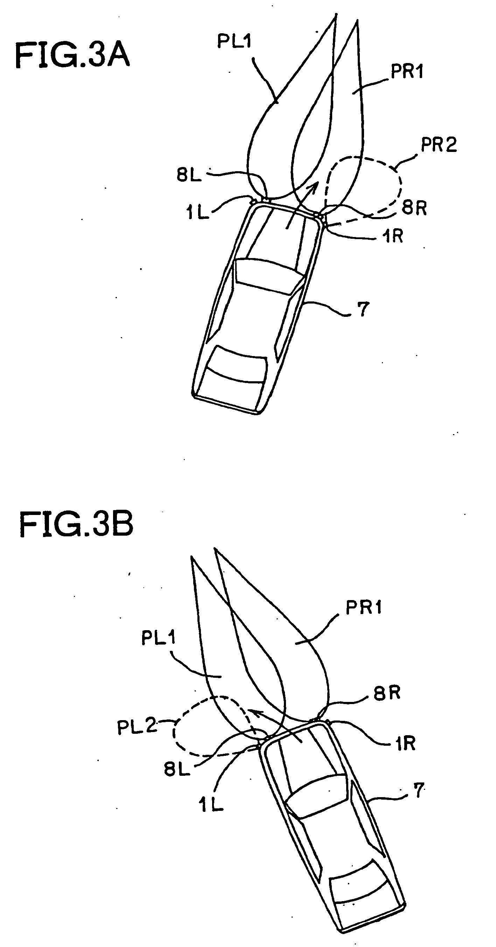

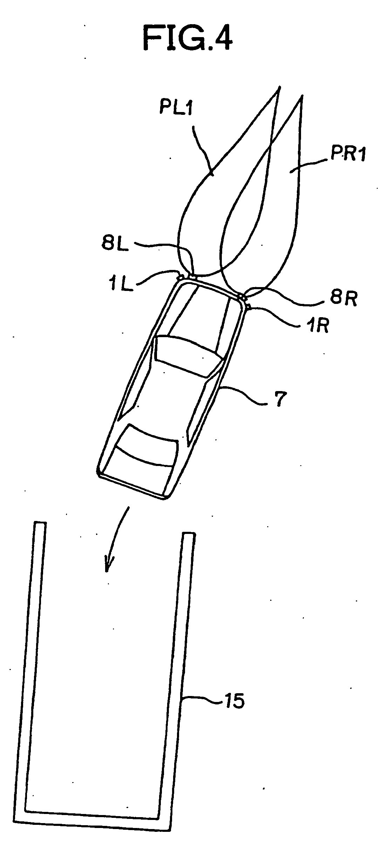

The left-side additional lamp 1L and the right-side additional lamp 1 R are mounted on the left side and the right side of the front part of a vehicle 7, respectively. As shown in Fig. 3A, Fig. 3B, and Fig. 4, left-side headlamp 8L and a right-side headlamp 8R are mounted on the left side and the right side of the front part of the vehicle 7, respectively. The left-side headlamp 8L and the right-side headlamp 8R illuminate a road surface and the like with lights having predetermined light distribution patterns PL1 and PR1, respectively. The left-side additional lamp 1L is provided near and on the left-side of the left-side headlamp 8L, and the right-side additional lamp 1 R is provided near and on the right-side of the right-side headlamp 8R. The left-side additional lamp 1L illuminates the road surface and the like with light having a predetermined light distribution pattern PL2, and the right-side additional lamp 1R illuminates the road surface and the like with light having a predetermined light distribution pattern PR2. The light having the predetermined light distribution pattern PL2 is illuminated outward the left side of the light distribution pattern PL1 from the left-side headlamp 8L. The light having the predetermined light distribution pattern PR2 is illuminated outward the right side of the light distribution pattern PR1 from the right-side headlamp 8R.

As shown in Fig. 1, the left-side additional lamp 1L and the right-side additional lamp 1R are connected to an ignition switch 9 and a battery 10 through the control device 6. The left-side headlamp 8L and the right-side headlamp 8R are also connected to the ignition switch 9 and the battery 10 through the control device 6, although the connection is not shown in Fig. 1. The left-side additional lamp 1L and the right-side additional lamp 1R may be a fixing type, or may be a rotary type in which an optical axis is made to rotate to the right and the left in synchronization with the steering of a steering wheel.

The steering angle sensor 2 detects a rotation angle and a direction of rotation of the steering wheel (not shown) of a vehicle on which the vehicle lighting device is mounted. The steering angle sensor 2 outputs a steering angle signal that represents the detected rotation angle and the direction of rotation. The speed sensor 5 detects a speed of the vehicle and outputs a speed signal that represents the detected speed.

The driver operates the headlamp switch 3 to turn on and off the left-side and the right-side headlamps 8L and 8R. The headlamp switch 3 outputs an on-signal when it is in an on-state and outputs an off-signal when it is in an off-state. For example, a high-level voltage signal may be output as the on-signal and a low-level signal can be output as the off-signal. The headlamp switch 3 may also be used to switch the headlamps 8L and 8R between a low beam (meeting beam) position and a high beam (main beam) position.

The reverse sensor 4 detects a reverse position out of the shift positions of a shift lever (not shown) and outputs a reverse signal. That is, the reverse sensor 4 outputs the reverse signal when the shift lever is operated to the reverse position.

The control device 6 includes an interface circuit 11 that serves as an external signal input device connected with the steering angle sensor 2, the headlamp switch 3, the reverse sensor 4, and the speed sensor 5. The control device 6 also includes a central processing unit-CPU 12 (processing controller), the left-side additional-lamp driver circuit 13L connected with the left-side additional lamp 1L (left-side additional lamp driver), the right-side additional-lamp driver circuit 13R connected with the right-side additional lamp 1R (right-side additional lamp driver), and a power circuit 14. As the left-side additional-lamp driver circuit 13L and the right-side additional-lamp driver circuit 13R, for example, a relay or a semiconductor switch (a field-effect transistor (FET) and a transistor) is used.

In the control device 6, the steering angle signal of the steering angle sensor 2; the on-signal and the off-signal of the headlamp switch 3, the reverse signal of the reverse sensor 4, and the speed signal of the speed sensor 5 are input to the interface circuit 11. The central processing unit-CPU 12 determines whether the left-side additional lamp 1L and the right-side additional lamp 1R are to be turned on and off based on the signals input. Based on the results of determination, the central processing unit-CPU 12 performs the processes of turning on and off the left-side additional lamp 1L and the right-side additional lamp 1R through the left-side additional-lamp driver circuit 13L and the right-side additional-lamp driver circuit 13R, respectively. In other words, the control device 6 performs the processes of turning on the left-side additional lamp 1L and the right-side additional lamp 1R separately and turning them off separately, based on the steering angle signal. When receiving the reverse signal, the control device 6 performs the process of turning off the left-side additional lamp 1L and the right-side additional lamp 1R. The control device 6 is a computer mounted on the vehicle.

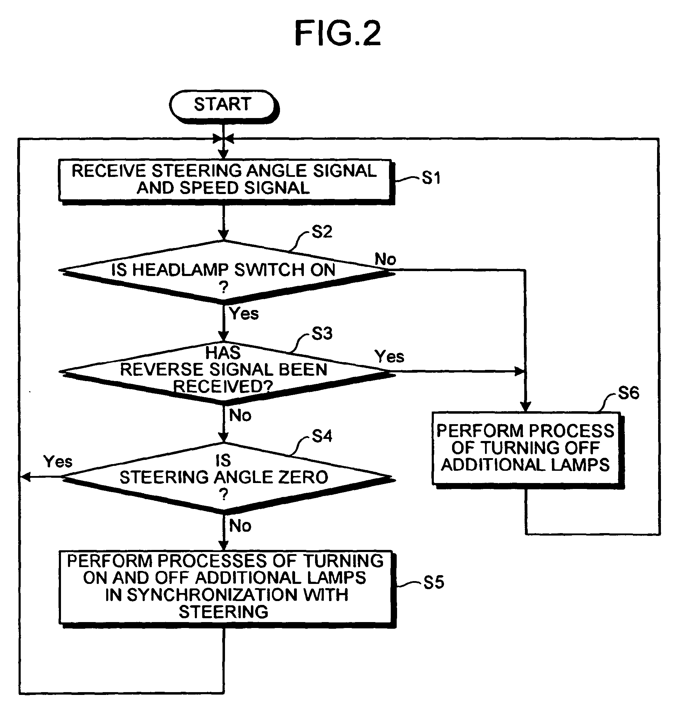

Fig. 2 is a flowchart of a process procedure performed by the control device 6. First, the control device 6 is started. Then, the steering angle sensor 2 detects a steering angle and outputs a steering angle signal. The speed sensor 5 detects a speed of the vehicle and outputs a speed signal.

The control device 6 receives the steering angle signal and the speed signal (step S1). The control device 6 then determines whether the headlamp switch 3 is on or off based on an on-signal and off-signal output from the headlamp switch 3 (step S2). When the headlamp switch 3 is off, the control device 6 performs the process of turning off the left-side additional lamp 1L and the right-side additional lamp 1R (step S6), and then the process returns to step S1.

When the headlamp switch 3 is on, i.e., when the left-side and the right-side headlamps 8L and 8R are on, the control device 6 determines whether a reverse signal has been received (step S3). When the reverse signal has not been received, the control device 6 determines, from the steering signal, whether the steering angle is zero (center) (S4). When the steering angle is zero, i.e., when the vehicle is running straight, the process returns to step S1.

When the steering angle is not zero, i.e., when the vehicle is making a turn, the control device 6 performs the processes of turning on the left-side additional lamp 1L and the right-side additional lamp 1R separately and turning them off separately, in synchronization with the steering of the steering wheel (step S5), and then the process returns to step S1.

Precisely, if the driver turns the steering wheel to the right, the steering angle sensor 2 outputs a steering angle signal that represents that the vehicle is turning toward right, and the control device 6 performs the process of turning on the right-side additional lamp 1R. As a result, as shown in Fig. 3A, the right-side additional lamp 1R is turned on so that the road surface and the like is illuminated with a light having the light distribution pattern PR2. The light distribution pattern PR2 is provided rightward the predetermined light distribution patterns PL1 and PR1 by the left-side and the right-side headlamps 8L and 8R. After completing the turning, when the steering wheel is returned to its original position, the control device 6 performs the process of turning off the right-side additional lamp 1R which is on based on the steering angle signal.

On the other hand, if the driver turns the steering wheel to the left, the steering angle sensor 2 outputs a steering angle signal that represents that the vehicle is turning toward right, and the control device 6 performs the process of turning on the left-side additional lamp 1L. As a result, as shown in Fig. 3B, the left-side additional lamp 1 L is turned on so that the road surface and the like is illuminated with a light having the light distribution pattern PL2. The light distribution pattern PL2 is provided leftward the predetermined light distribution patterns PL1 and PR1 by the left-side and the right-side headlamps 8L and 8R. After completing the turning, when the steering wheel is returned to its original position, the control device 6 performs the process of turning off the left-side additional lamp 1L which is on based on the steering angle signal.

As explained above, the vehicle lighting device according to the first embodiment separately turns on and off the left-side additional lamp 1L and the right-side additional lamp 1R in synchronization with steering of the steering wheel.

At step S3, when the reverse signal has been received, in other words, when the vehicle 7 is backing up, the control device 6 performs the process of turning off the left-side additional lamp 1L or the right-side additional lamp 1R, which is on (step S6), and the process returns to step S1.

For example, as shown in Fig. 4, when the driver is backing up the vehicle 7 and is about to put it into a garage 15 while turning the steering wheel to the right, the control device 6 performs the process of turning off the right-side additional lamp 1R through the right-side additional-lamp driver circuit 13R upon reception of the reverse signal from the reverse sensor 4. Conversely, when the driver is backing up the vehicle 7 and is about to put it into the garage 15 while turning the steering wheel to the left, the control device 6 performs the process of turning off the left-side additional lamp 1L through the left-side additional-lamp driver circuit 13L upon reception of the reverse signal. As a result, when the vehicle 7 is backing up, the left-side additional lamp 1L and the right-side additional lamp 1R are off. It is noted that when the vehicle 7 is backing up, the left-side headlamp 8L and the right-side headlamp 8R may be turned off.

Thus, in the vehicle lighting device according to the first embodiment, the left-side additional lamp 1L and the right-side additional lamp 1R can be turned on separately and turned off separately in synchronization with the steering of the steering wheel. Therefore, the vehicle lighting device according to the first embodiment can be operated at lesser power as compared with the conventional vehicle lighting device .

Furthermore, the left-side additional lamp 1L and the right-side additional lamp 1R are turned off when the vehicle 7 backs up. Therefore, such annoyance as explained below is eliminated. The annoyance is such that the left-side additional lamp 1L and the right-side additional lamp 1R repeatedly turn on or off in synchronization with the steering of the steering wheel while the vehicle 7 is backing up. Particularly, if the lamp is lit to illuminate a range at which the driver does not look, the driver may be annoyed with the illumination. Therefore, the elimination allows safety to be assured while the vehicle 7 is backing up. Moreover, the left-side additional lamp 1L and the right-side additional lamp 1R are a kind of auxiliary lamps, and therefore, even if they are turned off upon backing up of the vehicle 7, there is no particular problem on traffic safety to occur. Furthermore, it is possible to reduce power consumption as compared with the conventional vehicle lighting device that concurrently turns on left-side and right-side auxiliary lamps when concurrently turning off the left-side and right-side steer lamps

In the vehicle lighting device according to the first embodiment in particular, the left-side additional lamp 1L is connected to the left-side additional-lamp driver circuit 13L, and the right-side additional lamp 1R is connected to the right-side additional-lamp driver circuit 13R. Therefore, it is possible to reliably control the processes of turning on the left-side additional lamp 1L and the right-side additional lamp 1R separately and turning them off separately.

The vehicle lighting device according to the first embodiment is configured with the existing control device 6 (control circuit and ECU-electronic control unit) and the central processing unit-CPU 12 (processing controller) with minor changes provided thereon, which allows manufacturing costs to be reduced.

In the vehicle lighting device according to the first embodiment, when receiving the reverse signal from the reverse sensor 4 and the steering of the steering wheel has the predetermined angle or more, the control device 6 may be configured to perform the process of turning off the left-side additional lamp 1L and the right-side additional lamp 1R through the left-side additional-lamp driver circuit 13L and the right-side additional-lamp driver circuit 13R, respectively. The "predetermined angle or more" is set to, for example, a steering angle in which the basic steering of the steering wheel is added to an idle angle of the steering wheel with respect to the neutral position of the steering wheel. If the control device 6 is thus configured, it is possible to perform the process of turning off the left-side additional lamp 1L and the right-side additional lamp 1R according to how the vehicle 7 is backing up.

## Claims

1. A vehicle lighting device mounted on a vehicle (7), comprising:
at least one left-side additional lamp (1L) that is mounted at a first place on a front part of the vehicle (7);
at least one right-side additional lamp (1R) that is mounted on a second place on the front part of the vehicle (7);
a steering sensor (2) that detects a steering angle and a steering direction of steering of the vehicle (7) and outputs a steering signal that represents the steering angle and the steering direction detected;
a reverse sensor (4) that detects whether a shift lever of the vehicle (7) is in a reverse position and outputs a reverse signal when the shift lever is in the reverse position;
a left-side additional-lamp driver circuit (13L) that drives the left-side additional lamp (1L);
a right-side additional-lamp driver circuit (13R) that drives the right-side additional lamp (1R); and
a control device (6) that controls the left-side additional-lamp driver circuit (13L) so as to turn on the left-side additional lamp (1L) when the steering signal indicates that the vehicle is turning to left, and controls the right-side additional-lamp driver circuit (13R) so as to turn on the right-side additional lamp (1R) when the steering signal indicates that the vehicle is turning to right,
**characterized in that**
the control device (6) further controls the left-side additional-lamp driver circuit (13L) so as to turn off the left-side additional lamp (1L) and controls the right-side additional-lamp driver circuit (13R) so as to turn off the right-side additional lamp (1R) when the steering angle represented by the steering signal is equal to or more than a predetermined angle and the reverse sensor (4) outputs the reverse signal.

## Patentansprüche

1. Fahrzeugbeleuchtungsvorrichtung, die an einem Fahrzeug (7) angebracht ist, wobei sie umfasst:
wenigstens eine linke Zusatzleuchte (1L), die an einer ersten Stelle an einem vorderen Teil des Fahrzeugs (7) angebracht ist;
wenigstens eine rechte Zusatzleuchte (1R), die an einer zweiten Stelle an dem vorderen Teil des Fahrzeugs (7) angebracht ist;
einen Lenksensor (2), der einen Lenkwinkel und eine Lenkrichtung des Lenkens des Fahrzeugs (7) erfasst und ein Lenksignal ausgibt, das den erfassten Lenkwinkel und die erfasste Lenkrichtung darstellt;
einen Rückwärts-Sensor (4), der erfasst, ob sich ein Schalthebel des Fahrzeugs (7) in einer Rückwärts-Position befindet, und ein Rückwärts-Signal ausgibt, wenn sich der Schalthebel in der Rückwärts-Position befindet;
eine Ansteuerschaltung (13L) für die linke Zusatzleuchte, die die linke Zusatzleuchte (1L) ansteuert;
eine Ansteuerschaltung (13R) für die rechte Zusatzleuchte, die die rechte Zusatzleuchte (1R) ansteuert; und
eine Steuervorrichtung (6), die die Ansteuerschaltung (13L) der linken Zusatzleuchte so steuert, dass sie die linke Zusatzleuchte (1L) anschaltet, wenn das Lenksignal anzeigt, dass das Fahrzeug links abbiegt, und die Ansteuerschaltung (13R) der rechten Zusatzleuchte so steuert, dass sie die rechte Zusatzleuchte (1R) anschaltet, wenn das Lenksignal anzeigt, dass das Fahrzeug rechts abbiegt,
**dadurch gekennzeichnet, dass**
die Steuervorrichtung (6) des Weiteren die Ansteuerschaltung (13L) für die linke Zusatzleuchte so steuert, dass sie die linke Zusatzleuchte (1L) abschaltet, und die Ansteuerschaltung (13R) für die rechte Zusatzleuchte so steuert, dass sie die rechte Zusatzleuchte (1R) abschaltet, wenn der durch das Lenksignal dargestellte Lenkwinkel genauso groß ist wie oder größer als ein vorgegebener Winkel und der Rückwärts-Sensor (4) das Rückwärts-Signal ausgibt.

## Revendications

1. Dispositif d'éclairage de véhicule monté sur un véhicule (7), comprenant :
au moins une lampe supplémentaire de côté gauche (1L) qui est montée à un premier emplacement sur une partie avant du véhicule (7);
au moins une lampe supplémentaire de côté droit (1R) qui est montée à un second emplacement sur la partie avant du véhicule (7) ;
un détecteur de braquage (2) qui détecte un angle de braquage et une direction de braquage de la direction du véhicule (7) et qui émet un signal de braquage représentant l'angle de braquage et la direction de braquage détectés ;
un détecteur de marche arrière (4) qui détecte si un levier de changement de vitesse du véhicule (7) est dans une position de marche arrière et émet un signal de marche arrière lorsque le levier de changement de vitesse est dans la position de marche arrière ;
un circuit de commande de lampe supplémentaire de côté gauche (13L) qui commande la lampe supplémentaire de côté gauche (1L) ;
un circuit de commande de lampe supplémentaire de côté droit (13R) qui commande la lampe supplémentaire de côté droit (1R) ; et
un dispositif de commande (6) qui commande le circuit de commande de lampe supplémentaire de côté gauche (13L) de manière à allumer la lampe supplémentaire de côté gauche (1L) lorsque le signal de braquage indique que le véhicule tourne à gauche, et qui commande le circuit de commande de lampe supplémentaire de côté droit (13R) de manière à allumer la lampe supplémentaire de côté droit (1R) lorsque le signal de braquage indique que le véhicule tourne à droite,
**caractérisé en ce que**
le dispositif de commande (6) commande en outre le circuit de commande de lampe supplémentaire de côté gauche (13L) de manière à éteindre la lampe supplémentaire de côté gauche (1L), et le circuit de commande de lampe supplémentaire de côté droit (13R) de manière à éteindre la lampe supplémentaire de côté droit (1R), lorsque l'angle de braquage représenté par le signal de braquage est égal ou supérieur à un angle prédéterminé et que le détecteur de marche arrière (4) émet le signal de marche arrière.
